# EUROPÄISCHE PATENTSCHRIFT

(11) **EP 2 491 888 B1**
(45) Veröffentlichungstag und Bekanntmachung des Hinweises auf die Patenterteilung: **06.09.2017**
(21) Anmeldenummer: 12001096.2
(22) Anmeldetag: 18.02.2012
(51) Int. Cl.: A61C 8/00

(54) **Verankerungsvorrichtung zum Befestigen von orthodontischen Drähten für eine kieferorthopädische Korrekturvorrichtung**
Anchoring device for fixing orthodontic wires for a corrective orthodontic device
Dispositif d'ancrage destiné à la fixation de fils orthodontiques pour un dispositif de correction orthodontique

(30) Priorität: 23.02.2011 DE 102011012183
(43) Veröffentlichungstag der Anmeldung: 29.08.2012
(73) Patentinhaber: Winsauer, Heinz, Dr. med. dent., 6900 Bregenz (AT)
(72) Erfinder: Winsauer, Heinz, Dr. med. dent., 6900 Bregenz (AT)
(74) Vertreter: Riebling, Peter

(56) Entgegenhaltungen:
- WO-A2-2010/021535
- DE-B3-102005 061 463
- DE-B3-102007 045 199

## Beschreibung

Die Erfindung betrifft eine Verankerungsvorrichtung zum Befestigen von orthodontischen Drähten für eine kieferorthopädische Korrekturvorrichtung nach dem Oberbegriff des Patentanspruches 1.

Mit der auf den gleichen Anmelder zurückgehenden DE 10 2005 061 463 B3 ist eine Verankerungsvorrichtung nach dem Oberbegriff des Patentanspruches 1 bekannt geworden, bei der die orthodontischen Drähte einer kieferorthopädischen Korrekturvorrichtung mit einem Clip am Außenumfang der Ankerschraube befestigt werden.

Diese Befestigung hat den Nachteil, dass keine hohen Lasten übertragen werden können und dass eine Lagensicherung des die Ankerschraube umgreifenden Clips nicht gegeben ist. Daher besteht die Gefahr, dass sich ein solcher Clip von der Ankerschraube lösen kann, ohne dass dies beabsichtigt ist.

In der Druckschrift wird erwähnt, dass die Verbindung dadurch verbessert werden kann, dass der clipartige Adapater mit dem Schaft der Ankerschraube noch zusätzlich mit Hilfe eines aushärtbaren Klebstoffes oder Kunststoffes zusätzlich fixiert werden kann.

Die Anbringung von Klebstoff auf eine solche Clipverbindung ist jedoch nicht zuverlässig, denn es ist nicht kontrollierbar, auf welche Teile der Ankervorrichtung der Klebstoff gelangt und auf welche nicht. Daher ist die Festigkeit der Klebeverbindung nicht überprüfbar und außerdem ist die Aufbringung eines Klebstoffes in einen freien Raum, nämlich in den Umgebungsraum der Ankerschraube, schwierig und mit großen Arbeitsunsicherheiten behaftet.

Die DE 10 2007 045 199 B3 offenbart eine Verankerungsvorrichtung zum Befestigen von orthodontischen Drähten oder Halterungen für eine kieferorthopädische Korrekturvorrichtung, bestehend aus einer in den Kiefer einschraubbaren Ankerschraube, die mindestens einen Schraubenkopf und einen daran ansetzenden Schaft mit einem dort ausgebildeten Schraubgewinde aufweist, wobei der orthodontische Draht oder die Halterung lastübertragend an einer Hülse oder Kappe befestigt ist, die mindestens den Schraubenkopf der Ankerschraube umgreift. Die Hülse oder Kappe wird mit Hilfe eines Befestigungsmittels in Form einer Sicherungsdrahtes mit dem Schraubenkopf verbunden. Der Sicherungsdraht stellt eine lösbare Verbindung zwischen der Hülse oder Kappe und dem Schraubenkopf her. Diese Drahtverbindung ist nur wenig mechanisch belastbar und weist möglicherweise ein mechanisches Spiel auf.
Eine ähnliche Verankerungsvorrichtung ist in der WO 2010/021535 A2 offenbart.

Der Erfindung liegt die Aufgabe zugrunde, eine Verankerungsvorrichtung der eingangs genannten Art so weiterzubilden, dass eine wesentlich einfachere, überprüfbare und hoch-lastübertragende Verbindung zwischen einem kieferorthopädischen Behandlungsgerät und einer Ankerschraube gegeben ist.

Zur Lösung der gestellten Aufgabe ist die Erfindung durch die technische Lehre des Anspruches 1 gekennzeichnet.

Wesentliches Merkmal der Erfindung ist, dass der in der DE 10 2005 061 463 B3 beschriebene Clip entfällt und stattdessen eine Hülse verwendet wird, die im Wesentlichen den Schraubenkopf der Ankerschraube mit ihrem Innenumfang übergreift, so dass in diese Hülse ein aushärtbarer Klebstoff oder Kunststoff eingefüllt werden kann, der die Ankerschraube in der Art einer Klebearretierung in der Hülse oder Kappe festlegt.

Mit der gegebenen technischen Lehre ergibt sich nun der wesentliche Vorteil, dass auf eine direkte mechanische Verbindung in Form eines Clips, der den Außenumfang des Kopfes der Ankerschraube umgibt, verzichtet wird und stattdessen eine den Kopf der Ankerschraube übergreifende Hülse verwendet wird, deren Innenraum mit einem Klebstoff gefüllt werden kann, der sich auf und bevorzugt auch unter den Kopf der Ankerschraube erstreckt, so dass die Hülse oder Kappe auf der Ankerschraube gegen Verdrehung in Umfangsrichtung, jedoch auch gegen axiales Abziehen - in Druck- und Zugrichtung - gesichert ist.

Damit wird eine völlig neue Art einer Befestigung zwischen einer Ankerschraube und einem orthodontischen Draht beschrieben, denn die Verwendung einer Hülse oder Kappe hat den Vorteil, dass diese den Kopf der Ankerschraube am Gesamtumfang umgreift und daher in allen Raumrichtungen lastübertragend wirken kann.

Bei einem einseitig offenen Clip nach dem Stand der Technik war dies nicht gegeben.

Ferner besteht der Vorteil der Erfindung darin, dass durch bestimmte Maßnahmen dafür gesorgt wird, dass sich der Klebstoff sowohl in der Hülse oder Kappe auf dem Kopf der Ankerschraube verteilt, jedoch - im noch-flüssigen Zustand - auch am Kopf der Ankerschraube vorbeiläuft und an die Unterseite des Kopfes der Ankerschraube gelangt und sich dort ebenfalls mit bestimmten Vorsprüngen, Ringnuten und anderen Teilen am Innenumfang der Hülse lastübertragend verbindet.

Damit ist eine absolut sichere, in axialer Richtung lastübertragende Verbindung zwischen der Hülse und dem Kopf der Ankerschraube gegeben, weil sich der Klebstoff sowohl an der Oberseite der Ankerschraube als auch an deren Unterseite stoffschlüssig anlegt und mit Teilen am Innenumfang der Hülse verbindet.

Hierbei ist es nicht lösungsnotwendig, dass die axiale Länge der Hülse größer ist als die axiale Länge des Kopfes der Ankerschraube.

Ist die axiale Länge der Hülse oder die Kappe kürzer als die axiale Länge des Kopfes der Ankerschraube, dann genügt es, in der Ankerschraube zugeordnete Ringnuten oder sonstige im Durchmesser verminderte Vorsprünge oder Rücksprünge anzuordnen, die dafür sorgen, dass der Klebstoff sich auch an diesen Teilen anlegt, so dass die Hülse weder nach oben noch nach unten in axialer Richtung von der Ankerschraube abgezogen werden kann.

Ist hingegen die axiale Länge der Hülse oder der Kappe größer als die axiale Länge des Kopfes der Ankerschraube, dann genügt es, beim Befüllen der Hülse oder der Kappe mit Klebstoff dafür zu sorgen, dass der Klebstoff am Kopf der Ankerschraube vorbeifließt und sich an der Unterseite des Kopfes verteilt, wobei dadurch eine form- und stoffschlüssige Anpassung des Klebstoffes an Vor- oder Rücksprünge am Innenumfang der Hülse bzw. am Außenumfang des Kopfes der Ankerschraube vorgesehen sein können.

Alle Maßnahmen bezüglich der Dimensionierung der Hülse oder der Kappe und des Kopfes der Ankerschraube haben zum Ziel, dass ein aushärtbarer Klebstoff von oben in die Hülse oder die Kappe eingefüllt wird, der so in seiner Konsistenz gewählt ist, dass er am Kopf der Ankerschraube an Wandungen der Hülse entlang vorbei fließt und sich auch lastübertragend an der Unterseite des Kopfes der Ankerschraube mit Wandungen der Hülse verbindet.

Für die Einfüllung des Klebstoffes gibt es hierbei verschiedene Möglichkeiten.

Man kann entweder einen Klebstoff verwenden, dessen Viskosität so gering ist, dass er in der Art von Wasser sich seinen Weg durch die erfindungsgemäß vorgesehenen Ringspalte und Kammern im Innenraum zwischen der Hülse und dem Kopf der Ankerschraube sucht.

In einer anderen Ausgestaltung ist es vorgesehen, dass der Klebstoff unter dem Pressdruck einer Spritzampulle in die Hülse eingepresst wird, so dass er sich ebenfalls unter Überwindung von Ringspalten und Längsnuten seinen Weg am Kopf der Ankerschraube entlang vorbei sucht und in zugeordnete Vorsprünge, Rücksprünge oder Ringkammern an der Unterseite des Kopfes der Ankerschraube und zugeordnete Wandungen der Hülse gepresst wird.

In einer bevorzugten Ausgestaltung der Erfindung ist die Hülse im Wesentlichen zylindrisch ausgebildet und umgibt mit ihrem Innenumfang den Außenumfang des Schraubenkopfes unter Bildung eines radialen Spaltes.

Die Erfindung ist jedoch nicht auf eine zylindrische Hülse beschränkt. Die Hülse kann in gleicher Weise auch sechseckig oder mehreckig ausgebildet sein, und ebenso kann der Schraubenkopf entweder rund oder mehreckig ausgebildet sein.

Die Formgebung der Hülse wird also an die Formgebung des Kopfes der verwendeten Ankerschraube angepasst.

Wichtig ist nur, dass zwischen dem Innenumfang der Hülse und dem Außenumfang des Schraubenkopfes in axialer Richtung weisende Nuten vorhanden sind, die dafür sorgen, dass der an der Oberseite des Schraubenkopfes in die Hülse eingefüllte Klebstoff in diesen Nuten auch nach unten in Richtung zur Unterseite des Schraubenkopfes fließen kann.

Hierbei ist es gleichgültig, ob die klebstoffleitenden Nuten am Außenumfang des Schraubenkopfes oder am Innenumfang der Hülse angeordnet sind.

Ebenso können solche Nuten an beiden Teilen vorgesehen sein.

Nach einem weiteren wesentlichen Merkmal der Erfindung ist vorgesehen, dass diese Klebearretierung zwischen der Hülse und der Ankerschraube durch eine mechanische Kraft zerstörbar ausgebildet ist.

Dies bedeutet, dass es durch die Aufwendung einer gewissen Druckkraft nachträglich möglich ist, eine bereits durch ausgehärteten Klebstoff gebildete Klebearretierung zwischen Hülse und Ankerschraube auch wieder zu lösen.

Hierzu wird ein Abziehwerkzeug verwendet.

Zur besonders einfachen Montage der Hülse auf dem Schraubenkopf ist es vorgesehen, dass die Hülse an ihrem Innenumfang glatt zylindrisch ausgebildet ist und einen gleichfalls zylindrischen Schraubenkopf mit radialem Spiel umgreift. Hierbei bildet der Schraubenkopf ein oder mehrere in axialer Richtung gerichtete flüssigkeitsleitende Spalte oder Durchlässe in Richtung zur radial äußeren Innenwand der Hülse, die in eine am Schraubenkopf oder Schaft der Ankerschraube angeordnete Ringkammer münden, deren radial auswärts gerichtete Wandung durch den Innenumfang der Hülse begrenzt ist.

Damit wird klargestellt, dass die stoffflüssige Verbindung und die Klebearretierung an der Unterseite des Kopfes der Ankerschraube entweder an der Unterseite des Kopfes selbst angeordnet sein kann oder auch im Bereich des Schaftes, der sich an den Schraubenkopf anschließt.

Von besonderem Vorteil ist, dass die an der Unterseite der Hülse und des Schraubenkopfes angeordnete Ringkammer eine mehrere radial nach außen gerichtete Entlastungsbohrung aufweist. Wird von oben in die Oberseite der Hülse oder in die Kappe von unten Klebstoff eingespritzt, dann läuft dieser durch die vorher beschriebenen in axialer Richtung gerichteten Spalte und Nuten am Innenumfang der Hülse und am Außenumfang des Kopfes der Ankerschraube entlang und gelangt in die besagte Ringkammer. Hierbei wird es bevorzugt, wenn die Ringkammer nach unten durch Anschläge an der Hülse abgedichtet ist, so dass der in die Ringkammer hineinlaufende Klebstoff die Ringkammer auffüllt. Um einen Gegendruck von in der Ringkammer befindlichen Luft zu vermeiden, ist die Entlastungsbohrung vorgesehen, so dass wenn die Ringkammer mit Klebstoff befüllt wird, die Luft und schließlich dann auch der überschüssige Klebstoff aus der Entlastungsbohrung in radialer Richtung nach außen dringt.

Beim Auffüllen der Hülse von oben mit einem aushärtbaren Klebstoff, der z. B. über eine Spritze unter Druck eingefüllt wird, kann somit leicht optisch geprüft werden, ob auch die untere Ringkammer zwischen Hülse und der Unterseite des Schraubenkopfes mit Klebstoff gefüllt ist. Sobald Klebstoff aus der radialen Entlastungsbohrung nach außen tritt, ist damit eine optische Anzeige gegeben, dass auch die untere Ringkammer mit Klebstoff aufgefüllt ist. Damit ist eine optische Überprüfung der Qualität der Klebeverbindung gegeben, was beim Stand der Technik nicht möglich war.

Wie bereits eingangs ausgeführt, ist die Formgebung der Hülse oder Kappe (zylindrisch, oval, rechteckig, quadratisch oder sechseckig) in weiten Grenzen veränderbar. Ebenso ist die Formgebung des Kopfes der Ankerschraube in weiten Grenzen veränderbar.

Es können also Ankerschrauben mit quadratischen, rechteckigen, sechseckigen oder zylindrischen Köpfen verwendet werden.

Es wird ein Abziehwerkzeug beschrieben, das nicht Teil der Erfindung ist, dessen Spindel das Spindelgewinde eines Gegenhalters durchgreift und in axialer Verlängerung mit einem Druckdorn versehen ist, wobei am Gegenhalter ein Haltearm angeordnet ist, der zur Anlage an den abzuziehenden Gegenstand (Hülse oder Kappe) geeignet ist.

Sowohl am Drehgriff als auch am Gegenhalter sind Handhaben angeordnet, so dass mit dem Finger der einen Hand der Drehgriff gedreht werden kann, während mit dem Finger der anderen Hand der Gegenhalter festgehalten wird. Durch Drehung des Drehgriffes wird die Spindel durch das Spindelgewinde im Gegenhalter hindurchgedreht, wodurch der am vorderen freien Ende der Spindel angeordnete Druckdorn in axialer Richtung angetrieben ist.

Wenn nun am Gegenhalter ein Haltearm fest montiert ist, der sich an einen abzuziehenden Gegenstand (Hülse oder Kappe) am Außenumfang oder an der Unterseite anlegt, kann somit eine einfache Abdrückaktion mit Hilfe des erfindungsgemäßen Abziehwerkzeuges durchgeführt werden. Der Druckdorn drückt hierbei auf den Gegenstand und der am Gegenhalter angeordnete Haltearm zieht an den dem Gegenstand umgebenden abzuziehenden Gegenstand (Hülse), so dass damit eine Abziehwirkung gegeben ist.

In einer Anpassung des Abziehwerkzeuges an eine Verankerungsvorrichtung nach der Erfindung ist es ferner vorgesehen, dass sich der Haltearm des Gegenhalters lastübertragend an der Unterseite oder Außenseite der erfindungsgemäßen Hülse anlegt und dass der mit der Spindel verbundene Druckdorn in den Innenraum der Hülse eindringt und sich an der Oberseite des mit Klebstoff bedeckten Schraubenkopfes anlegt und gegen diesen in axialer Richtung drückt.

Wenn nun die Spindel durch Drehung des Drehgriffes weiter gedreht wird, drückt der Druckdorn mit vergrößerter Kraft auf den Schraubenkopf und andererseits zieht der am Gegenhalter angeordnete Haltearm an der Unter- oder Außenseite der Hülse oder der Kappe, so dass diese schließlich unter Zerstörung der Klebeverbindung von der Ankerschraube nach oben abgezogen werden kann.

Zur Erleichterung des Abziehvorganges kann es vorgesehen werden, dass zunächst mit einem geeigneten Bohrer der in der Hülse auf der Ankerschraube aufgeschichtete, ausgehärtete Klebstoff entfernt wird, bis zumindest die Ankerschraube (durch eine dünne Schicht von verbleibendem Klebstoff) hindurch sichtbar ist und der Druckdorn in den Innenraum der Hülse hineingreifen kann.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Draufsicht auf eine Korrekturvorrichtung mit Befestigung am Kiefer vor Anbringung der Klebearretierung
- Figur 2:: die gleiche Darstellung nach Figur 1 mit über eine Klebearretierung am Kiefer befestigten Korrekturvorrichtung
- Figur 3:: Schnitt durch eine Ankerschraube mit einer darauf befestigten Hülse vor Einbringung der Klebearretierung
- Figur 3a:: Schnitt durch eine Anordnung ähnlich der Figur 3 mit dem Austausch der Hülse durch eine Kappe
- Figur 4:: die gleiche Darstellung wie Figur 3 nach Einbringung der Klebearretierung
- Figur 5:: die Draufsicht auf ein Abziehwerkzeug, das nicht Teil der Erfindung ist
- Figur 6:: Schnitt durch die Verankerungsvorrichtung mit Darstellung, wie das Abziehwerkzeug, das nicht Teil der Erfindung ist, die Klebearretierung zerstört und die Hülse nach oben abzieht
- Figur 7:: eine gegenüber den Figuren 1 bis 6 abgewandelte Ausführung einer Hülse
- Figur 8:: schematisiert die Draufsicht und teilweise den Schnitt durch die Anordnung nach Figur 7

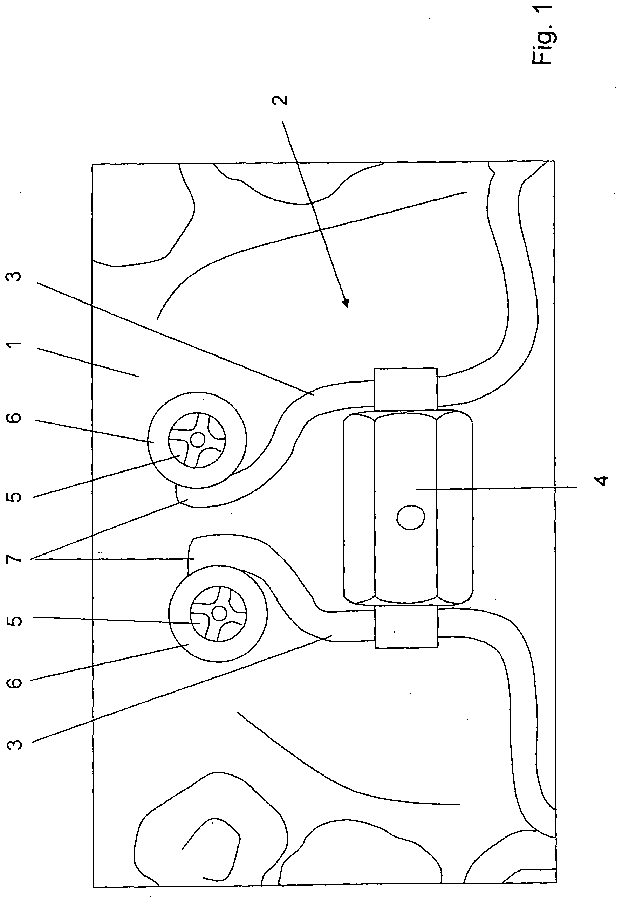

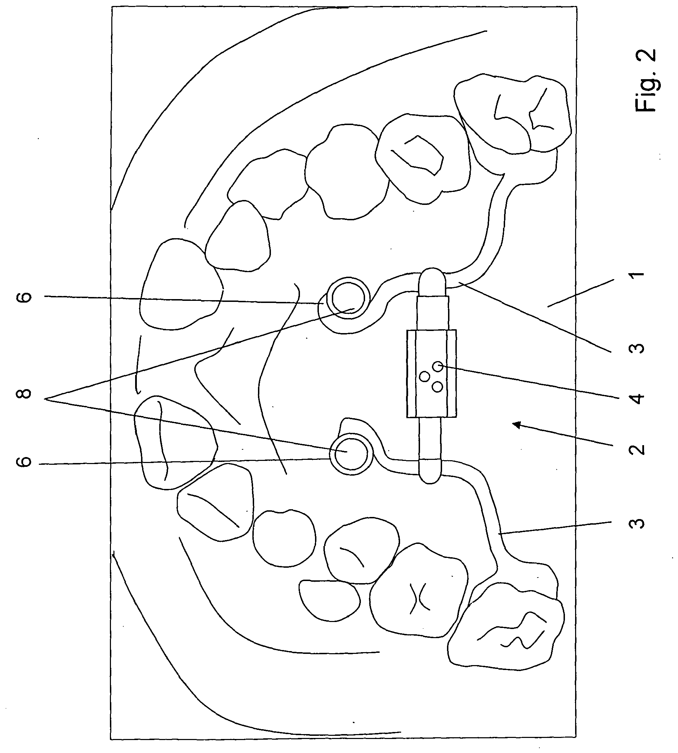

In den Figuren 1 und 2 ist dargestellt, dass an einem Kiefer 1 zwei Ankerschrauben 10 durch Einschrauben befestigt sind Die Ankerschrauben 10 halten eine Korrekturvorrichtung 2 über Drähte 3.

Die Korrekturvorrichtung 2 besteht aus einer Spindelmutter 4, die axial auf zwei gegenläufig antreibbaren Spindeln aufgeschraubt ist, so dass mit Drehbetätigung der Spindelmutter die beiden Drähte 3, welche mit der Korrekturvorrichtung 2 verbunden sind, auseinandergespreizt werden.

Jeder Draht 3 ist gemäß Figur 1 am Außenumfang einer Hülse 6 durch Kleben oder Löten oder andere Verbindungsmittel verbunden. Im gezeigten Ausführungsbeispiel besteht die Befestigung 7 aus einer Lötverbindung.

Die Befestigung zwischen dem jeweiligen Draht 3 und der Ankerschraube 10 erfolgt über jeweils eine Hülse 6, welche den Schraubenkopf 5 der Ankerschraube 10 übergreift. Dies ist in Figur 1 erkennbar, weil dort die im Schraubenkopf 5 der Ankerschraube 10 angeordneten Schlitze, welche für die Drehbetätigung der Ankerschraube 10 vorgesehen sind, noch sichtbar sind, nachdem noch kein Klebstoff eingefüllt wurde.

Die Figur 2 zeigt die erfindungsgemäße Klebearretierung 8, und es ist erkennbar, dass in den Innenraum der jeweiligen Hülse 6 ein Klebstoff 25 eingefüllt wurde, so dass der Schraubenkopf 5 im Vergleich zur Figur 1 nicht mehr sichtbar ist.

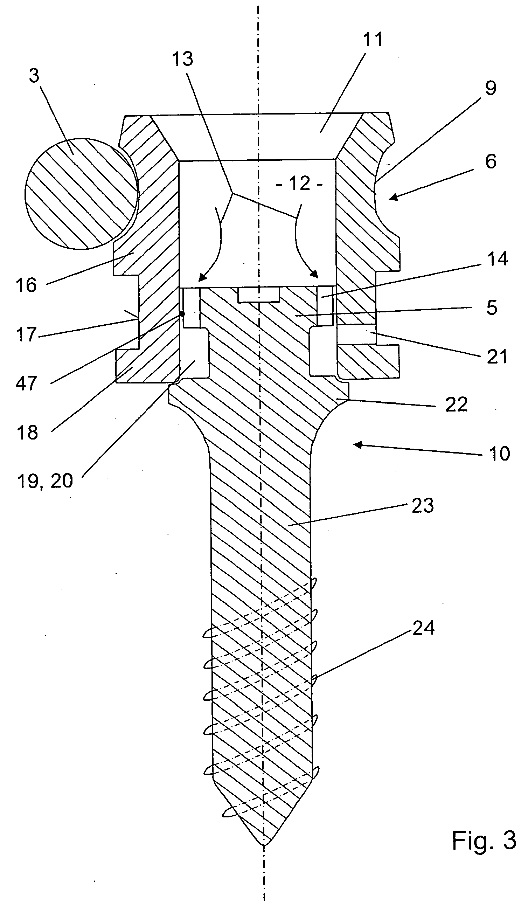

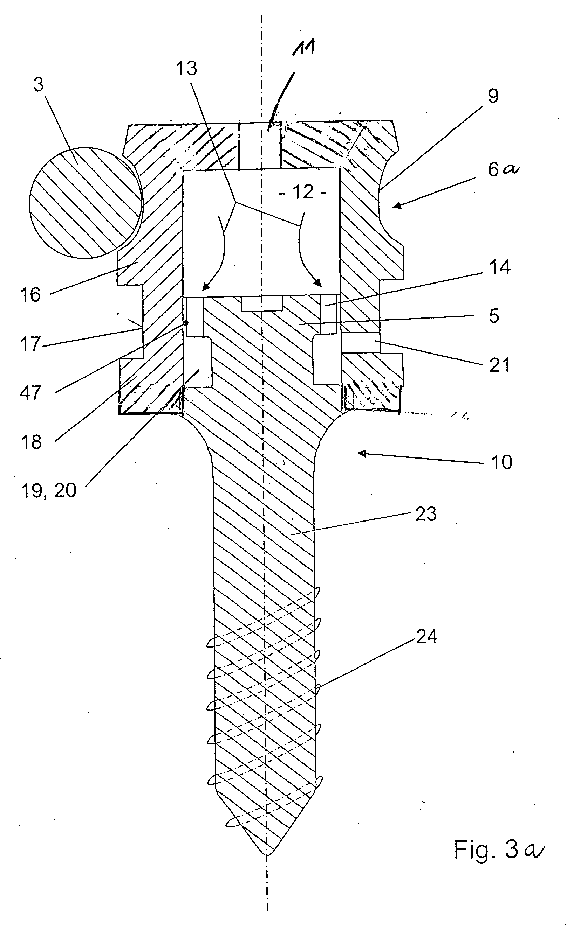

Die Figuren 3 bis 4 zeigen die weiteren Einzelheiten der erfindungsgemäßen Verankerungsvorrichtung.

Die Ankerschraube 10 besteht aus dem Schraubenkopf 5, der bevorzugt als Sechskantschraube ausgebildet ist und der deshalb - wegen seiner Sechskant-Profilierung - Sechskant-Ausnehmungen 14 aufweist, die in axialer Richtung nach unten führen.

Unterhalb diesen Sechskant-Ausnehmungen 14 ist eine im Durchmesser verminderte Ringkammer 20 (oder Ringnut) im Schraubenkopf 5 der Ankerschraube 10 angeordnet.

In axialer Verlängerung der Ringkammer 20 schließt sich ein im Durchmesser vergrößerter Ringanschlag 22 an. An diesen schließt sich der Schaft 23 der Ankerschraube 10 an, der in ein Schraubgewinde 24 übergeht.

Die erfindungsgemäße Hülse 6 wird nun auf die Oberseite des Schraubenkopfes 5 der Ankerschraube 10 aufgesetzt, so dass der untere und äußere Anschlagring 18 zur Anlage auf den im Durchmesser vergrößerten Ringanschlag 22 der Ankerschraube 10 zur Anlage kommt.

Es ist ein oberer Aufnahmeraum 12 für die Aufnahme von Klebstoff 25 vorgesehen, der nach oben durch eine trichterförmig sich erweiternde Einfüllöffnung 11 begrenzt ist.

Am Außenumfang des oberen Teils der Hülse 6 ist eine Ringnut 9 eingeformt, die einen unteren Anschlag 16 ausbildet, wobei in diese Ringnut der Draht 3 eingeformt ist und mit der Befestigung 7 festgelegt ist.

Die Figur 3 zeigt auch, dass der Schraubenkopf 5 einen gewissen radialen Spalt 47 zum Innenumfang der Hülse 6 ausbildet. Es kommt jedoch nicht auf die Größe des radialen Spaltes 47 an, denn es reicht aus, wenn der Klebstoff in Pfeilrichtung 13 durch die flüssigkeitsleitenden Rinnen nach unten am Schraubenkopf 5 entlangläuft, welche durch die Sechskant-Ausnehmungen 14 am Schraubenkopf 5 ausgebildet sind.

Statt solcher Sechskant-Ausnehmungen 14 können auch mit einem Fräser Rinnen oder andere halboffene Nuten eingebracht werden. Ebenso ist es möglich, im Schraubenkopf klebstoffleitende Bohrungen anzubringen, welche in die darunter liegende Ringkammer 20 hineinreichen.

Am Außenumfang der Hülse 6 ist im Übrigen noch eine im Durchmesser verminderte Ringnut 17 eingeformt.

In die Ringkammer mündet mindestens eine oder auch mehrere Entlastungsbohrungen 21, welche die Wandung der Hülse 6 durchsetzen.

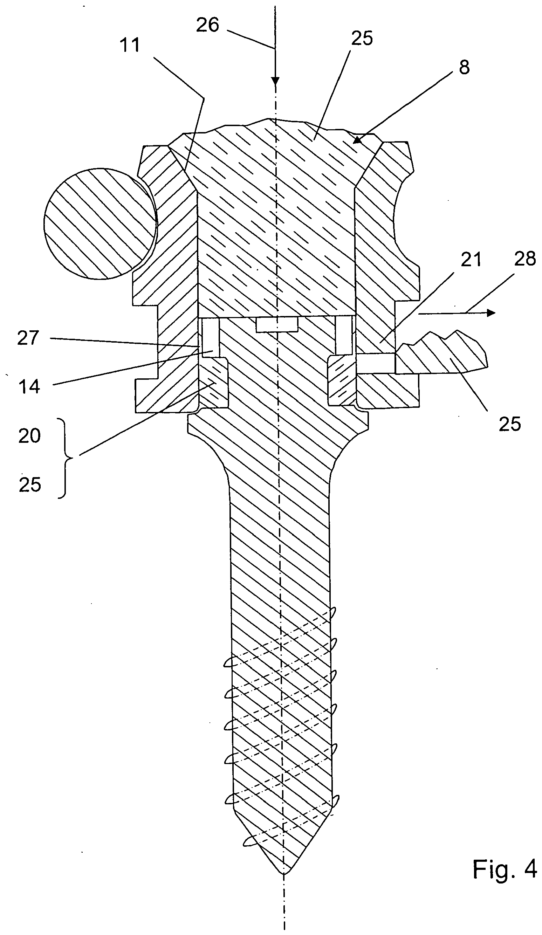

Somit bildet die Hülse 6 eine untere Aufnahmeöffnung 19, welche etwa zylindrisch ausgebildet ist und sich bis zu dem inneren Anschlagring 15 erstreckt und ferner eine obere Aufnahmeöffnung oder einen oberen Aufnahmeraum 12, der gemäß der nachfolgenden Figur 4 mit Klebstoff befüllt wird.

Erfindungsgemäß ist nun vorgesehen, dass gemäß Figur 3 ein Klebstoff in Pfeilrichtung 13 über die Einfüllöffnung 11 der Hülse 6 eingefüllt wird.

Die Figur 3a zeigt, dass die Hülse 6 durch eine Kappe 6a ersetzt sein kann. Für die gleichen Teile gelten die gleichen Erläuterungen.

Hierbei zeigt die Figur 4, dass der Klebstoff 25 in flüssiger Form in Pfeilrichtung 26 in den Aufnahmeraum 12 eingefüllt wird und aufgrund seiner geringeren Viskosität oder seines über eine Einfüllspritze ausgeübten Druckes über die Spalten 47 und/oder die Sechskant-Ausnehmungen 14 nach unten am Schraubenkopf 5 vorbei verläuft und in die Ringkammer 20 hineinfließt.

Damit wird auch die untere Aufnahmeöffnung 19 der Hülse 6 mit Klebstoff aufgefüllt, und weil der Ringanschlag 22 am Schaft 23 der Ankerschraube 10 im Wesentlichen abdichtend an der Unterseite der Hülse 6 anliegt, kommt es bei weiterem Einpressen von Klebstoff 25 in die Ringkammer 20 zu einem Überdruck, wodurch dann überflüssiger Klebstoff 25 in Pfeilrichtung 28 aus der einen oder mehreren Entlastungsbohrungen 21 nach außen austritt. Dies ist für den Bediener ein gut sichtbares Zeichen, dass die Klebeverbindung auch im Bereich der Ringkammer 20 hergestellt ist und damit eine optimal konfigurierte Klebearretierung 8 gegeben ist, die von außen optisch zu kontrollieren ist.

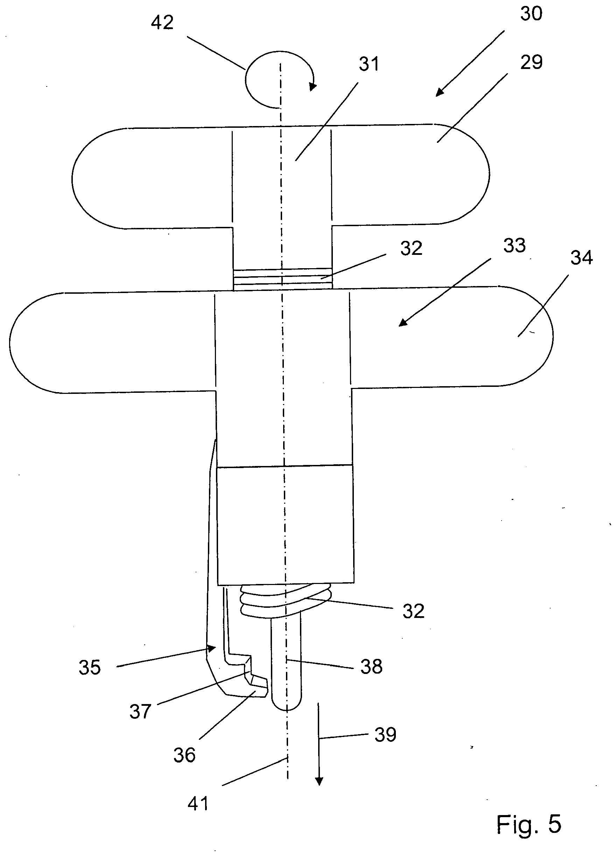

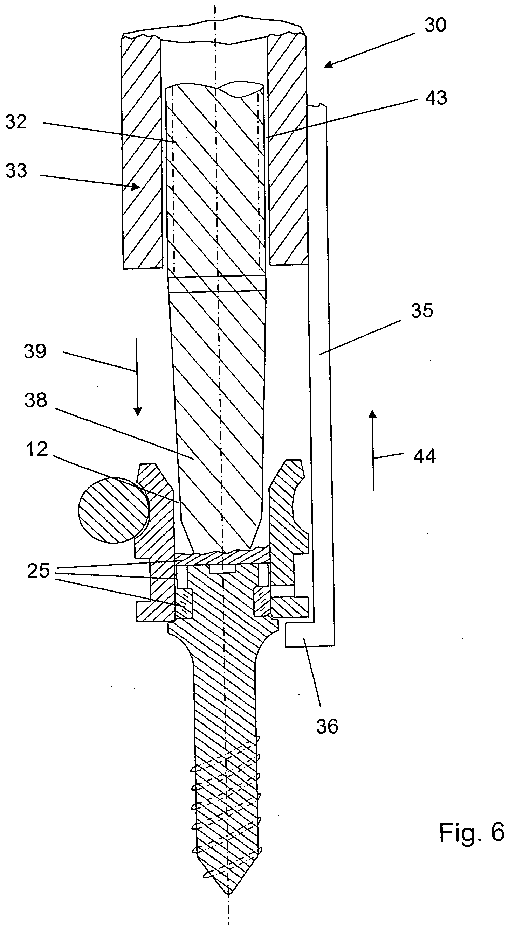

Die Figuren 5 und 6 zeigen, wie die ausgehärtete Klebeverbindung nachträglich mit einem Abziehwerkzeug 30, das nicht Teil der Erfindung ist, zerstört werden kann, um so die Korrekturvorrichtung 2 von den Ankerschrauben 10 zu entfernen.

Zu diesem Zweck besteht das Abziehwerkzeug 30 aus einem oberen Drehgriff 31, der um die Längsachse 41 des Abziehwerkzeuges 30 in Pfeilrichtung 42 und in Gegenrichtung hierzu verdrehbar ist, wozu eine Handhabe 29 dient.

Der Drehgriff 31 ist drehfest mit einer Spindel 32 verbunden, welche ein zugeordnetes Spindelgewinde 43 (siehe Figur 6) in einem darunter angeordneten Gegenhalter 33 durchgreift, der wiederum mit einer Handhabe 34 versehen ist.

Am freien unteren Ende der Spindel 32 ist ein Druckdorn 38 angeordnet, der bei Verdrehung des Drehgriffes 31 somit in Pfeilrichtung 39 nach unten verschoben wird.

Am Außenumfang des Gegenhalters 33 ist ein Haltearm 35 angeordnet, an dessen unteren freien Ende ein axialer Anschlag 37 mit einem radialen Ansatz 36 angeordnet sind.

Zum Aufbrechen der Klebearretierung 8 wird es bevorzugt, wenn der nach Figur 4 oberhalb des Schraubenkopfes 5 der Ankerschraube 10 befindliche Klebstoff mit einem Bohrer oder Fräser entfernt wird, bis nur noch wenig Klebstoff oberhalb des Schraubenkopfes 5 der Ankerschraube 10 angeordnet ist. Dies zeigt Figur 6.

Somit kann der Druckdorn 38 in den nach oben offenen Aufnahmeraum 12 der Hülse 6 eingeführt werden, und gleichzeitig legt sich der Haltearm 35 mit den Anschlägen 36, 37 an der Unterseite der Hülse 6 an.

Durch eine Relativverdrehung zwischen dem Drehgriff 31 und dem Gegenhalter 33 bewegt sich somit der Druckdorn 38 in Pfeilrichtung 39 in den Aufnahmeraum 12 der Hülse 6 hinein und drückt sich an der Oberseite des Schraubenkopfes 5 ab.

Gleichzeitig wird ein Gegendruck durch den Haltearm 35 an der Unterseite der Hülse 6 erzeugt, die somit in Pfeilrichtung 44 nach oben unter Zerstörung der Klebeverbindung herausgerissen wird, ohne dass ein unzulässiger Druck auf die Ankerschraube 10 selbst ausgeübt wird. Die Ankerschraube 10 bleibt also von der Abdrückaktion mit dem Abziehwerkzeug 30 kräftefrei, so dass der Patient die Abdrückaktion nicht spürt.

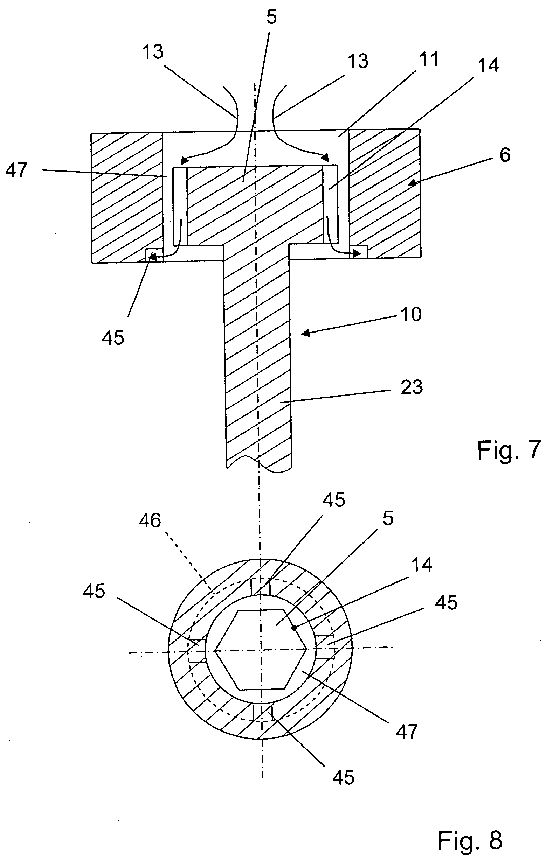

Die Figuren 7 und 8 zeigen ein abgewandeltes Ausführungsbeispiel einer erfindungsgemäßen Hülse 6, wo erkennbar ist, dass die besonderen Anschlagsituationen, Ringnuten und dergleichen auch in vereinfachter Form vorhanden sein können.

Die dort gezeigte Hülse 6 weist lediglich einen zylindrischen Aufnahmeraum 12 auf, der eine nach oben gerichtete Einfüllöffnung 11 ausbildet, und der dort einzufüllende Klebstoff verteilt sich in Pfeilrichtung 13 entlang von in Längsrichtung im Schraubenkopf 5 angeordneten Sechskant-Ausnehmungen 14.

Diese Sechskant-Ausnehmungen 14 können auch entfallen und durch Bohrungen, Rinnen oder halboffene Nuten in am Außenumfang des Schraubenkopfes 5 ersetzt sein.

Ebenso können zugeordnete Nuten oder halboffene Rinnen am Innenumfang der Hülse vorgesehen sein.

Wichtig hierbei ist, dass an der Unterseite der Hülse Hinterschneidungen 45 angeordnet sind, in welche der Klebstoff einfließen kann, um so die Unterseite des Schraubenkopfes 5 gegenüber der Hülse 6 mit Klebstoff zu fixieren und gegen axiales Abziehen zu sichern.

Die genannten Aufnahmeräume sind radial nach innen gerichtet, sind offene Hinterschneidungen 45, die zur Aufnahme von Klebstoff geeignet sind.

In einer anderen Ausgestaltung kann es vorgesehen sein, dass die Hinterschneidungen 45 eine ringsum laufende Ringkammer 46 ausbilden, wie sie in gestrichelten Linien dargestellt ist.

Ebenso kann es vorgesehen sein, dass die Hinterschneidungen 45 oder eine ringsum laufende Ringkammer 46 auch nach unten hin (in axialer Richtung) abgeschlossen ist, so dass es sich nicht um eine nach unten hin geöffnete Nut oder Hinterschneidung handelt, sondern eine am Innenumfang der Hülse eingearbeitete Ringnut.

**Zeichnungslegende**

| | | | |
|---|---|---|---|
| 1 | Kiefer | 25 | Klebstoff |
| 2 | Korrekturvorrichtung | 26 | Pfeilrichtung |
| 3 | Draht | 27 | Ringspalt |
| 4 | Spindelmutter | 28 | Pfeilrichtung |
| 5 | Schraubenkopf | 29 | Handhabe |
| 6 | Hülse 6a Kappe | 30 | Abziehwerkzeug |
| 7 | Befestigung | 31 | Drehgriff |
| 8 | Klebearretierung | 32 | Spindel |
| 9 | Ringnut außen | 33 | Gegenhalter |
| 10 | Ankerschraube | 34 | Handhabe |
| 11 | Einfüllöffnung | 35 | Haltearm |
| 12 | Aufnahmeraum | 36 | Ansatz |
| 13 | Pfeilrichtung | 37 | Anschlag |
| 14 | Sechskant-Ausnehmung | 38 | Druckdorn |
| 15 | | 39 | Pfeilrichtung |
| 16 | Anschlag | 40 | |
| 17 | Ringnut unten | 41 | Längsmittenachse |
| 18 | Anschlagring außen | 42 | Pfeilrichtung |
| 19 | Aufnahmeöffnung (von 6) | 43 | Spindelgewinde |
| 20 | Ringkammer (von 10) | 44 | Pfeilrichtung |
| 21 | Entlastungsbohrung | 45 | Hinterschneidung |
| 22 | Ringanschlag (von 10) | 46 | Ringkammer |
| 23 | Schaft (von 10) | 47 | Spalt |
| 24 | Schraubgewinde (von 10) | | |

## Patentansprüche

1. Verankerungsvorrichtung zum Befestigen von orthodontischen Drähten oder Halterungen (3) für eine kieferorthopädische Korrekturvorrichtung (2) bestehend aus einer in den jeweiligen Kiefer (1) einschraubbaren Ankerschraube (10), die mindestens einen Schraubenkopf (5) und einen daran ansetzenden Schaft (23) mit einem dort ausgebildeten Schraubgewinde (24) aufweist und einer Hülse (6) oder Kappe (6a), an welcher ein orthodontischer Draht oder die Halterung (3) lastübertragend befestigbar ist, wobei die Hülse (6) oder Kappe (6a) mindestens den Schraubenkopf (5) der Ankerschraube (10) umgreift, **dadurch gekennzeichnet, dass** als weiterer Bestandteil der Verankerungsvorrichtung ein aushärtbarer Klebstoff vorhanden ist, und dass die Hülse (6) oder Kappe (6a) auf dem Schraubenkopf (5) der Ankerschraube (10) mit dem aushärtbaren Klebstoff in Form einer aushärtbaren Klebearretierung (8) festgelegt ist.

2. Verankerungsvorrichtung nach Anspruch 1, **dadurch gekennzeichnet, dass** die Verankerungsvorrichtung aus einer den Schraubenkopf (5) am Außenumfang umgebenden Hülse (6) oder Kappe (6a) besteht, die mit einem aushärtbaren Klebstoff (25) befüllt ist, welcher Klebstoff (25) lastübertragend sowohl an der Ober- als auch an die Unterseite des Schraubenkopfes (5) angelegt ist.

3. Verankerungsvorrichtung nach Anspruch 1 oder 2, **dadurch gekennzeichnet, dass** die Hülse (6) oder Kappe (6a) im Wesentlichen zylindrisch ausgebildet ist und mit ihrem Innenumfang den Außenumfang des Schraubenkopfes (5) unter Bildung eines radialen Spaltes (47) umgibt.

4. Verankerungsvorrichtung nach einem der Ansprüche 1 bis 3, **dadurch gekennzeichnet, dass** die Klebearretierung (8) zwischen der Hülse (6) oder Kappe (6a) und der Ankerschraube (10) zerstörbar ausgebildet ist.

5. Verankerungsvorrichtung nach einem der Ansprüche 1 bis 4, **dadurch gekennzeichnet, dass** sich die Hülse (6) oder Kappe (6a) an ihrem Innenumfang an der Oberseite des Schraubenkopfes (5) anlegt und dass der Schraubenkopf (5) ein oder mehrere axial gerichtete, flüssigkeitsleitende Spalte oder Durchlässe (14, 47) aufweist, die in eine am Schraubenkopf (5) oder Schaft (23) angeordnete Ringkammer (20) münden, die radial auswärts durch den Innenumfang der Hülse oder Kappe (6) begrenzt ist.

6. Verankerungsvorrichtung nach einem der Ansprüche 1 bis 5, **dadurch gekennzeichnet, dass** der durch die Ringkammer (20) der Ankerschraube (10) und den Innenumfang der Hülse (6) oder Kappe (6a) gebildete Aufnahmeraum (19) zur Aufnahme von Klebstoff (25) ausgebildet ist.

7. Verankerungsvorrichtung nach Anspruch 6, **dadurch gekennzeichnet, dass** der Aufnahmeraum (19) eine radial die Hülse (6) oder Kappe (6a) durchsetzende Entlastungsbohrung (21) aufweist.

## Claims

1. Anchoring device for fixing of orthodontic wires or retainers (3) for an orthopaedic jaw correction device (2) comprising an anchor screw (10) which can be screwed into the jaw (1) concerned and has at least one screw head (5) and a shank (23) attached thereto with a screw thread (24) formed thereon and a sleeve (6) or cap (6a) to which an orthodontic wire or the retainer (3) can be fastened in a load-transferring manner, wherein the sleeve (6) or cap (6a) embraces at least the screw head (5) of the anchor screw (10), **characterised in that** a thermosetting adhesive is present as a further component of the anchoring device, and **in that** the sleeve (6) or cap (6a) is secured on the screw head (5) of the anchor screw (10) with the thermosetting adhesive in the form of a thermosetting adhesive immobiliser (8).

2. Anchoring device according to claim 1, **characterised in that** the anchoring device comprises a sleeve (6) or cap (6a) which surrounds the screw head (5) at its external circumference and is filled with a thermosetting adhesive (25), which adhesive (25) is applied both to the upper side and the underside of the screw head (5) in a load-transferring manner.

3. Anchoring device according to claim 1 or 2, **characterised in that** the sleeve (6) or cap (6a) is embodied in substantially cylindrical form and with its internal circumference surrounds the external circumference of the screw head (5) forming a radial gap (47).

4. Anchoring device according to one of claims 1 to 3, **characterised in that** the adhesive immobiliser (8) between the sleeve (6) or cap (6a) and the anchor screw (10) is embodied so as to be destructible.

5. Anchoring device according to one of claims 1 to 4, **characterised in that** at its internal circumference the sleeve (6) or cap (6a) bears on the upper side of the screw head (5) and **in that** the screw head (5) has one or more axially aligned liquid-conveying gaps or openings (14, 47) which lead into an annular chamber (20) which is arranged on the screw head (5) or shank (23) and is bounded in a radial outwards direction by the internal circumference of the sleeve or cap (6).

6. Anchoring device according to one of claims 1 to 5, **characterised in that** the receiving space (19) formed by the annular chamber (20) of the anchor screw (10) and the internal circumference of the sleeve (6) or cap (6a) is designed to receive adhesive (25).

7. Anchoring device according to claim 6, **characterised in that** the receiving space (19) has a relief bore (21) which passes radially through the sleeve (6) or cap (6a).

## Revendications

1. Dispositif d'ancrage pour la fixation de fils orthodontiques (3) ou d'attaches pour un dispositif de correction orthodontique (2) composé d'une vis d'ancrage (10) qui est apte à être vissée dans la mâchoire (1) et qui comporte au moins une tête de vis (5) et une tige (23) partant de celle-ci et portant un filetage (24), et d'un manchon (6) ou d'un chapeau (6a) auquel un fil orthodontique ou l'attache (3) est apte à être fixé avec une transmission de charge, le manchon (6) ou le chapeau (6a) enserrant au moins la tête (5) de la vis d'ancrage (10), **caractérisé en ce qu'**il y a comme autre composant du dispositif d'ancrage une colle durcissable, et **en ce que** le manchon (6) ou le chapeau (6a) est fixé sur la tête (5) de la vis d'ancrage (10) avec la colle durcissable sous la forme d'un blocage par collage durcissable (8).

2. Dispositif d'ancrage selon la revendication 1, **caractérisé en ce que** le dispositif d'ancrage se compose d'un manchon (6) ou du chapeau (6a) qui entoure la tête de vis (5) sur la circonférence extérieure de celle-ci et qui est rempli d'une colle durcissable (25), laquelle colle (25) est appliquée avec une transmission de charge aussi bien contre le côté supérieur que contre le côté inférieur de la tête de vis (5).

3. Dispositif d'ancrage selon la revendication 1 ou 2, **caractérisé en ce que** le manchon (6) ou le chapeau (6a) a une forme globalement cylindrique et entoure avec sa circonférence intérieure la circonférence extérieure de la tête de vis (5) en formant un espace radial (47).

4. Dispositif d'ancrage selon l'une des revendications 1 à 3, **caractérisé en ce que** le blocage par collage (8) entre le manchon (6) ou le chapeau (6a) et la vis d'ancrage (10) est conçu pour pouvoir être détruit.

5. Dispositif d'ancrage selon l'une des revendications 1 à 4, **caractérisé en ce que** le manchon (6) ou le chapeau (6a) s'applique, sur sa circonférence intérieure, contre le côté supérieur de la tête de vis (5), et **en ce que** la tête de vis (5) comporte un ou plusieurs espaces ou passages (14, 47) dirigés axialement, qui laissent passer le liquide et qui débouchent dans une chambre annulaire (20) disposée sur la tête de vis (5) ou sur la tige (23) et limitée radialement vers l'extérieur par ladite circonférence intérieure du manchon ou du chapeau (6).

6. Dispositif d'ancrage selon l'une des revendications 1 à 5, **caractérisé en ce que** le logement (19) formé par la chambre annulaire (20) de la vis d'ancrage (10) et la circonférence intérieure du manchon (6) ou du chapeau (6a) est conçu pour recevoir de la colle (25).

7. Dispositif d'ancrage selon la revendication 6, **caractérisé en ce que** le logement (19) présente un perçage de décharge (21) qui traverse radialement le manchon (6) ou le chapeau (6a).
